(19) **Europäisches Patentamt / European Patent Office / Office européen des brevets**

(11) **EP 3 517 272 A1**

(12) **EUROPEAN PATENT APPLICATION**
published in accordance with Art. 153(4) EPC

(43) Date of publication:
**31.07.2019 Bulletin 2019/31**

(21) Application number: **17853093.7**

(22) Date of filing: **20.09.2017**

(51) Int Cl.:
**B29C 55/28** (2006.01)    **B29C 47/06** (2006.01)
**B29C 47/78** (2006.01)    **B60C 5/14** (2006.01)
**C08L 23/00** (2006.01)    **C08L 53/02** (2006.01)
**C08L 77/00** (2006.01)    **B29K 21/00** (2006.01)
**B29K 77/00** (2006.01)    **B29L 7/00** (2006.01)
**B29L 9/00** (2006.01)

(86) International application number:
**PCT/JP2017/033958**

(87) International publication number:
**WO 2018/056323 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.09.2016 JP 2016185620**

(71) Applicant: **The Yokohama Rubber Co., Ltd.**
**Tokyo 105-8685 (JP)**

(72) Inventors:
• **TOMOI, Shusaku**
**Kanagawa 254-8601 (JP)**
• **SATO, Shun**
**Kanagawa 254-8601 (JP)**

• **NOMAGUCHI, Tsuyoshi**
**Kanagawa 254-8601 (JP)**
• **MITA, Masaya**
**Kanagawa 254-8601 (JP)**
• **TANAKA, Ken**
**Kanagawa 254-8601 (JP)**
• **IMAGAWA, Makoto**
**Kanagawa 254-8601 (JP)**
• **TAKADA, Kenji**
**Kanagawa 254-8601 (JP)**
• **YAMADA, Hiroshi**
**Kanagawa 254-8601 (JP)**

(74) Representative: **Dilg, Haeusler, Schindelmann**
**Patentanwaltsgesellschaft mbH**
**Leonrodstrasse 58**
**80636 München (DE)**

(54) **METHOD FOR PRODUCING FILM FOR TIRE**

(57)    A method of manufacturing a film for a tire capable of suppressing thermal shrinkage of the film after formation is provided. The method of manufacturing a film for tire (3) used in an air penetration preventing layer of a pneumatic tire, composed of a thermoplastic elastomer with an elastomer component dispersed within a thermoplastic resin includes performing heat treatment on the film for tire (3) formed by inflation molding or cast molding in a state of being wound in a roll together with a liner material (4) configured to regulate deformation of the film for tire (3), the heat treatment being at a heat treating temperature equal to or higher than a glass transition temperature of a resin with a highest glass transition temperature in the thermoplastic resin included in the film for tire.

FIG. 3

**Description**

Technical Field

The present invention relates to a method of manufacturing a film for a tire composed of a thermoplastic elastomer composition with an elastomer component dispersed within a thermoplastic resin, used in an air penetration preventing layer of a pneumatic tire, and more specifically relates to a method of manufacturing a film for a tire capable of suppressing thermal shrinkage of the film after formation.

Background Art

Recently, disposing a film composed of a thermoplastic elastomer composition with an elastomer component dispersed within a thermoplastic resin on the most inner surface of a tire as an air penetration preventing layer has been proposed. Such a film (hereinafter, referred to as film for tire) is extended to form a thin film by a method such as inflation molding or cast molding (T die molding), and then heat treatment (annealing treatment) is applied so that the form is stabilized by heat fixing (see Patent Document 1).

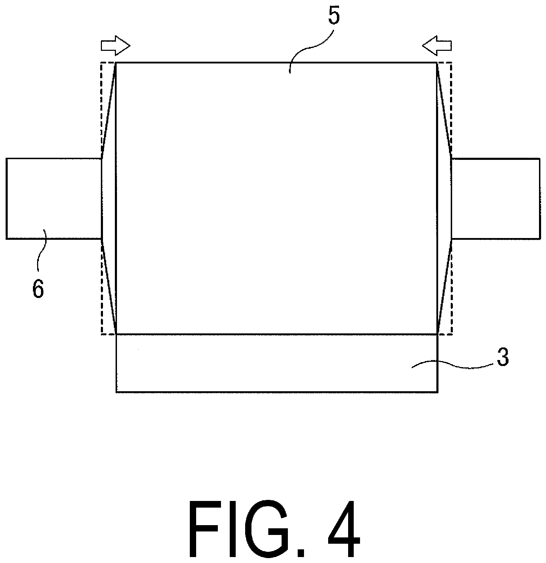

However, the above-described film for tire formed by an extension method tends to contract upon aging or heating and shrinkage occurs. This is problematic in that the finally obtained film for tire may not be a preferred size. This is particularly problematic when heat treatment is applied to the film for tire after forming with the film being wound around a core portion. In this case, the wound film for tire has a deformed cross section trapezoidal shape as illustrated in FIG. 4 due to thermal shrinkage. Therefore, a measure to suppress thermal shrinkage of the film for tire after formation is demanded.

Citation List

Patent Literature

Patent Document 1: JP 2014-117827 A

Summary of Invention

Technical Problem

An object of the present invention is to provide a method of manufacturing a film for tire capable of suppressing thermal shrinkage of the film after formation.

Solution to Problem

The method of manufacturing a film for tire to achieve the object described above is a method of manufacturing a film for tire used in an air penetration preventing layer of a pneumatic tire, composed of a thermoplastic elastomer composition with an elastomer component dispersed within a thermoplastic resin, the method including performing heat treatment on the film for tire formed by inflation molding or cast molding in a state of being wound in a roll together with a liner material configured to regulate deformation of the film for tire, the heat treatment being at a heat treatment temperature equal to or higher than a glass transition temperature of a resin with a highest glass transition temperature in the thermoplastic resin included in the film for tire.

Advantageous Effects of Invention

According to the present invention, as described above, winding the film for tire in a roll together with the liner material enables thermal shrinkage of the film for tire to be prevented even when a temperature of film for tire is high at the time of heat treatment after formation.

In the present invention, preferably, the liner material is wider than the film for tire, does not adhere to itself at the heat treating temperature, and has a thermal shrinkage rate of 1% or less at the heat treating temperature. Especially, a melting point or a softening point of the liner material is preferably equal to or higher than the heat treating temperature. Accordingly, even under high temperature during heat treatment, deformation (contract) of the film for tire is reliably regulated.

In the present invention, the liner material may be a sheet or fabric of at least one of polyethylene, polypropylene, polyamide, polyester, polyvinyl chloride, polytetrafluorethylene and vulcanized rubber.

In the present invention, a treatment time for the heat treatment may be equal to or greater than a time it takes for a a portion of the film for tire that is hardest to increase temperature to reach the glass transition temperature, with the film for tire in a state of being wound in a roll together with the liner material.

In the present invention, the thermoplastic resin may be at least one polyamide resin selected from the group consisting of nylon 6, nylon 66, nylon 46, nylon 11, nylon 12, nylon 69, nylon 610, nylon 612, nylon 6/66, nylon 6/66/12, nylon 6/66/610, nylon MXD6, nylon 6T, nylon 6/6T, nylon 9T, and aromatic nylon.

In the present invention, the elastomer component may include at least one selected from the group consisting of halogenated isoolefin-paraalkylstyrene copolymer rubber, acid anhydride modified ethylene-α-olefin copolymer, styrene-isobutylene-styrene block copolymer, acid anhydride modified styrene-isobutylene-styrene block copolymer, and acid anhydride modified ethylene-ethylacrylate copolymer.

Brief Description of Drawings

FIG. 1 is a schematic diagram illustrating an example of a method of manufacturing of the present invention.
FIG. 2 is a schematic diagram illustrating another example of a method of manufacturing of the present invention.
FIG. 3 is an explanatory diagram schematically illustrating a state of a film for tire and a liner material wound together.
FIG. 4 is an explanatory diagram schematically illustrating a state after heat treatment of a known film for tire.

Description of Embodiments

Configuration of embodiments of the present invention are described in detail below with reference to the accompanying drawings.

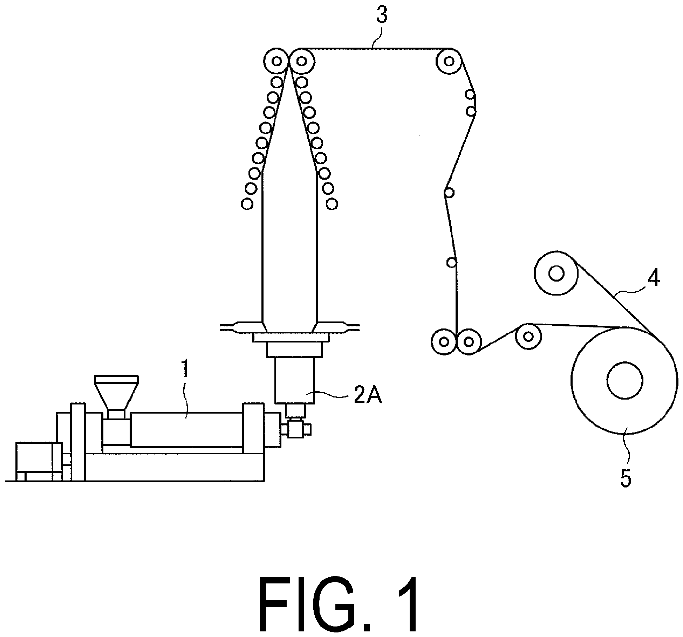

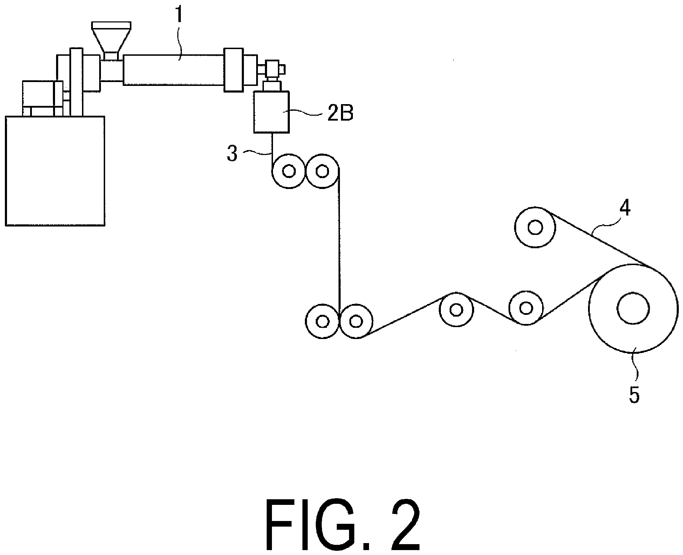

A method of manufacturing a film for tire according to the present invention includes, as illustrated in FIGS. 1 and 2, a process of melting a thermoplastic elastomer composition with an extruder 1 or the like (melting process), a process of forming a thin film by extruding a melted thermoplastic elastomer composition from a die such as an inflation die 2A or a T-shaped die 2B (forming process), a process of winding a formed film for tire 3 with a liner material 4 in a roll to form a roll 5 for a heat treatment process described below (winding process), and a process of heat treating the roll 5 (film for tire in a state of wound with the liner material 4 in a roll) (heat treatment process).

In the melting process, the thermoplastic elastomer composition which is an ingredient of the film for tire 3 is melted. The melting is performed using a Banbury mixer or an extruder including a single shaft or two or more shafts screw. The condition for melting is not limited as long as the thermoplastic elastomer composition for use is appropriately melted. A melting temperature is preferably set at equal to or higher than a melting point of the thermoplastic elastomer composition for use, and preferably 20°C higher than the melting point such as in a range from 200°C to 250°C. Also, a melting time may be set, for example, in a range from 15 seconds to 10 minutes.

In the forming process, the thermoplastic elastomer composition in the molten state is formed as a thin film by inflation molding or cast molding. Specifically, in inflation molding, the thermoplastic elastomer composition in a molten state is extruded from the inflation die 2A attached to an outlet portion of the extruder 1, and then extended to form the thin film. Also, in cast molding, the thermoplastic elastomer composition in a molten state is extruded from a T-shaped die 2B attached to the outlet portion of the extruder 1, and then extended to form the thin film.

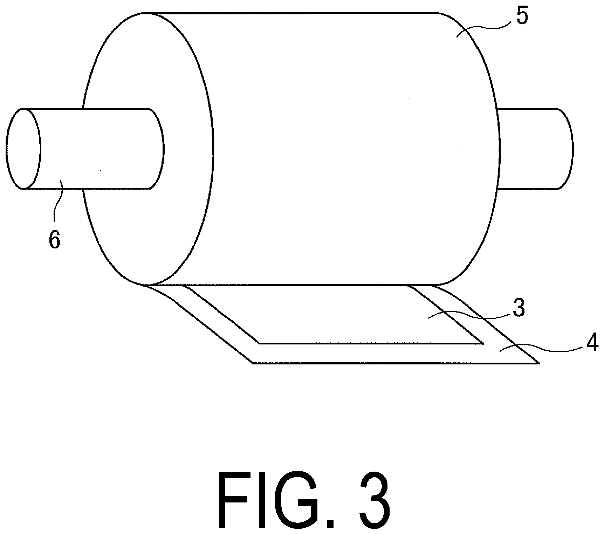

In the winding process, as illustrated in FIG. 3, the formed film for tire 3 is wound around a core portion 6 in a roll state together with the liner material 4 configured to regulate the deformation of the film for tire 3. The liner material 4 is preferably wider than the film for tire 3 in order to cover the entire width of the film for tire 3 when the liner material 4 is wound in a roll together with the film for tire 3. Preferably, the liner material 4 does not adhere to itself at the heat treating temperature and thermal shrinkage at the heat treating temperature is 1% or less to regulate the deformation of the film for tire 3 even during the heat treatment process described below. Especially, a melting point or a softening point of the liner material 4 is preferably equal to or higher than the heat treating temperature. For such a liner material 4, a sheet or a fabric composed of at least one of polyethylene, polypropylene, polyamide, polyester, polyvinyl chloride, polytetrafluorethylene, and vulcanized rubber may be used.

In the heat treatment process, in order for the film for tire 3 to heat fix with the shape formed during the above-described forming process, a heat treatment is applied to the roll 5, i.e., the film for tire 3 and the liner material 4 rolled together via the above-described winding process. At this time, the heat treatment is performed at a heat treating temperature equal to or higher than a glass transition temperature of the resin with the highest glass transition temperature in the thermoplastic resin included in the film for tire 3. Also, the treatment time for heat treatment is preferably equal to or greater than the time it takes for the temperature of a portion of the film for tire 3 which is the hardest to increase in temperature (roll 5) to reach the glass transition temperature, with the film for tire 3 in a state of being wound in a roll together with the liner material 4.

The film for tire 3 formed through the above-described processes is able to prevent thermal shrinkage of the film for tire 3 even when the film for tire 3 is a high temperature during the heat treatment process because the film for tire 3 is wound together with the liner material 4 in a roll in the winding process and deformation of the film for tire 3 is regulated by the liner material 4. Especially, in the known method of manufacturing in which the film for tire 3 is wound without the liner material 4, as illustrated in FIG. 4, in the film for tire 3 in a wound state, deformation is regulated by the core portion at a portion near to the core portion 6. On the other hand, the farther from the core portion 6, the less binding forces the core 6 provides, and the film for tire 3 contracts in the directions indicated by the arrows in the drawing from the original wound state (chain line in FIG. 4), and the entire part of the film for tire 3 in a wound state deforms into trapezoidal shape in a cross section. However, such a shortcoming can be prevented.

If the width of the liner material 4 is smaller than the width of the film for tire 3, the deformation of an end portion in a width direction of the film for tire 3 protruding from the liner material 4 cannot be sufficiently regulated and it is difficult to appropriately prevent thermal shrinkage. Further, if the width of the liner material 4 is equal to the width of the film for tire 3, the deformation can be regulated across the entire width of the film for tire 3. Preferably, the width of the liner material 4 is larger than the width of the film for tire 3. If the liner material 4 adheres to itself at the heat treating temperature, especially if the liner material 4 is wider than the film for tire 3, the end portion in the width direction of the liner material 4 protruding from the film for tire 3 adheres to itself and it is difficult to unwind the film for tire 3 after heat treatment. If thermal shrinkage rate of the liner material 4 at the heat treating temperature is higher than 1%, thermal shrinkage occurs in the liner material 4 during the heat treatment process and the deformation of the film for tire 3 cannot be appropriately regulated.

If the heat treating temperature is lower than the glass transition temperature of the resin with the highest glass transition temperature in the thermoplastic resin included in the film for tire 3, heat fixing of the film for tire 3 cannot be appropriately performed. Preferably, when the glass transition temperature of the thermoplastic resin with the highest glass transition temperature in the thermoplastic resin included in the thermoplastic elastomer composition is Tg, heat treatment is performed under the temperature condition ranging from Tg + 5°C to Tg + 50°C. If the heat treating time is less than the time it takes for the temperature of the portion of the roll 5, i.e., the film for tire 3 and the liner material 4 wound together in a roll, which is the hardest to increase in temperature to reach to the glass transition temperature, heat fixing of the film for tire 3 cannot be appropriately performed.

The thermoplastic elastomer composition used in the film for tire 3 of the present invention is a composition obtained by dispersing an elastomer component in a thermoplastic resin.

The thermoplastic resin used in the thermoplastic elastomer composition of the present invention is not particularly limited and can be appropriately selected in accordance with the application of the thermoplastic elastomer composition. Preferable examples of thermoplastic resins include a polyamide resin (e.g., nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/12 (N6/66/12), nylon 6/66/610 copolymer (N6/66/610), nylon MXD6 (MXD6), nylon 6T, nylon 9T, nylon 6/6T copolymer, nylon 66/PP copolymer, nylon 66/PPS copolymer) or an N-alkoxyalkyl compound thereof, e.g., a methoxymethyl compound of nylon 6, a methoxymethyl compound of a nylon 6/610 copolymer, or a methoxymethyl compound of nylon 612; a polyester resin (e.g., an aromatic polyester such as polybutylene terephthalate (PBT), polyethylene terephthalate (PET), polyethylene isophthalate (PEI), a PET/PEI copolymer, polyarylate (PAR), polybutylene naphthalate (PBN), a liquid crystal polyester, a polyoxyalkylene diimide acid/polybutylene terephthalate copolymer); a polynitrile resin (e.g., polyacrylonitrile (PAN), polymethacrylonitrile, an acrylonitrile/styrene copolymer (AS), a (meta)acrylonitrile/styrene copolymer, a (meta)acrylonitrile/styrene/butadiene copolymer), a polymethacrylate resin (e.g., polymethyl-methacrylate (PMMA), polyethyl-methacrylic acid), a polyvinyl resin (e.g., polyvinyl acetate, a polyvinyl alcohol (PVA), a vinyl alcohol/ethylene copolymer (EVOH), polyvinylidene chloride (PVDC), polyvinylchloride (PVC), a vinyl chloride/vinylidene chloride copolymer, a vinylidene chloride/methylacrylate copolymer, a vinylidene chloride/acrylonitrile copolymer (ETFE)), a cellulose resin (e.g., cellulose acetate, cellulose acetate butyrate), a fluoride resin (e.g., polyvinylidene difluoride (PVDF), polyvinyl fluoride (PVF), polychlorofluoroethylene (PCTFE), a tetrafluoroethylene/ethylene copolymer), and an imide resin (e.g., an aromatic polyimide (PI)).

Among thes thermoplastic elastomer compositions, at least one polyamide resin selected from the group consisting of nylon 6, nylon 66, nylon 46, nylon 11, nylon 12, nylon 69, nylon 610, nylon 612, nylon 6/66, nylon 6/66/12, nylon 6/66/610, nylon MXD6, nylon 6T, nylon 6/6T, nylon 9T, and an aromatic nylon is preferred from the perspective of air barrier properties.

In order to improve processability, dispersibility, heat resistance, oxidation resistance, or the like, the thermoplastic resin used in the present invention may contain additive ingredients that are generally blended into thermoplastic resin compositions, such as fillers, reinforcing agents, processing aids, stabilizers, and antioxidants, to an extent that does not inhibit the effects of the present invention. A plasticizer should not be added from the perspective of gas barrier properties and heat resistance, but a plasticizer may be added to an extent that does not inhibit the effects of the present invention.

The elastomer component used in the thermoplastic elastomer composition of the present invention is not particularly limited and can be appropriately selected in accordance with the application of the thermoplastic elastomer composition. Examples of elastomers used in the present invention include diene rubbers and hydrogenated products thereof (for example, natural rubber (NR), isoprene rubber (IR), epoxidized natural rubber, styrene-butadiene rubber (SBR), butadiene rubber (BR, high-cis BR and low-cis BR), nitrile rubber (NBR), hydrogenated NBR, and hydrogenated SBR), olefin rubbers (for example, ethylene propylene rubber (EPDM, EPM), maleic acid modified ethylene propylene rubber (M-EPM), butyl rubber (IIR), isobutylene and aromatic vinyl or diene monomer copolymer, acrylic rubber (ACM), and ionomer), halogen-containing rubbers (for example, Br-IIR, CI-IIR, brominated copolymer of isobutylene/para-methyl styrene (Br-IPMS), chloroprene rubber (CR), chlorohydrin rubber (CHR), chlorosulfonated polyethylene rubber (CSM), chlorinated polyethylene rubber (CM), and maleic acid modified chlorinated polyethylene rubber (M-CM)), silicone rubbers (for example, methyl vinyl silicone rubber, di-methyl silicone rubber, and methyl phenyl vinyl silicone rubber), sulfur-containing rubbers (for example, polysulfide rubber), fluororubbers (for example, vinylidene fluoride rubbers, fluorine-containing vinyl ether rubbers, tetrafluoroethylene-propylene rubbers, fluorine-containing silicone rubbers, and fluorine-containing phosphazene rubbers), and thermoplastic elastomers (for example, styrene elastomers, olefin elastomers, ester elastomers, urethane elastomers, polyamide elastomers).

Among these elastomer components, at least one selected from the group consisting of halogenated isoolefin-paraalkylstyrene copolymer rubber, acid anhydride modified ethylene-$\alpha$-olefin copolymer, styrene-isobutylene-styrene block copolymer, acid anhydride modified styrene-isobutylene-styrene block copolymer, acid anhydride modified ethylene-ethyl acrylate copolymer is preferred from the perspective of durability or processability.

Moreover, when the compatibility is different upon blending by combining the previously specified thermoplastic resin and the previously specified elastomer, a suitable compatibility agent may be used as a third component to enable compatibilization of both the resin and the elastomer. By mixing the compatibility agent in the blend, interfacial tension between the thermoplastic resin and the elastomer is reduced, and as a result, the particle size of the elastomer that forms the dispersion phase becomes very small and thus the characteristics of both components may be realized effectively. In general, such a compatibility agent has a copolymer structure of both or either the thermoplastic resin and the elastomer, or a copolymer structure having an epoxy group, a carbonyl group, a halogen group, an amino group, an oxazoline group, or a hydroxyl group, which is capable of reacting with the thermoplastic resin or the elastomer. While the type of compatibility agent may be selected according to the type of thermoplastic resin and elastomer to be blended, such a compatibility agent generally includes: a styrene/ethylene butylene block copolymer (SEBS) or a maleic acid modified compound thereof; a EPDM, EPM, EPDM/styrene or EPDM/acrylonitrile graft copolymer or a maleic acid modified compound thereof; a styrene/maleic acid copolymer, or a reactive phenoxy, and the like. The compounded content of such a compatibility agent is not particularly limited, but is preferably from 0.5 to 10 parts by weight with respect to 100 parts by weight of the polymer component (total of the thermoplastic resin and the elastomer).

A composition ratio of the specific thermoplastic resin and the elastomer in the thermoplastic elastomer composition of a thermoplastic resin blended with an elastomer, while not limited in particular, may be determined as appropriate to establish a dispersed structure as a discontinuous phase of the elastomer in the matrix of the thermoplastic resin, and preferably has a weight ratio ranging from 90/10 to 20/80.

In the present invention, the thermoplastic elastomer composition obtained by blending the thermoplastic resin with elastomer may be mixed with another polymer, such as a compatibilizer, in such an amount that the required characteristics as an air permeation preventing layer are not hindered. The purposes of mixing such a polymer are to improve the compatibility between the thermoplastic resin and the elastomer, to improve the forming processability of the material, to improve the heat resistance, to reduce cost, and the like. Examples of the material used for the polymer include polyethylene (PE), polypropylene (PP), polystyrene (PS), ABS, SBS, polycarbonate (PC), and the like.

Furthermore, the elastomer can be dynamically vulcanized when being mixed in with the thermoplastic resin. A vulcanizing agent, a vulcanization aid, vulcanization conditions (temperature, time), and the like used in the dynamic vulcanization can be determined as appropriate in accordance with the composition of the elastomer to be added, and are not particularly limited.

Furthermore, a filler (calcium carbonate, titanium oxide, alumina, and the like), a reinforcing agent such as carbon black and silica, a softening agent, a plasticizer, a processing aid, a pigment, a dye, or an anti-aging agent that are generally compounded with polymer compounds may be optionally compounded so long as the required characteristics as an air permeation preventing layer are not hindered. The thermoplastic elastomer composition has a structure in which the elastomer is distributed as a discontinuous phase in the matrix of the thermoplastic resin. By having such a structure, it becomes possible to provide the air penetration preventing layer with sufficient flexibility and sufficient rigidity that is attributed to the effect of the resin layer as a continuous phase. Furthermore, it becomes possible to obtain, during forming, a forming processability equivalent to that of the thermoplastic resin regardless of the amount of the elastomer.

A manufactured thermoplastic elastomer composition may under the above-described melting process after, for example, being extruded in a strand shape and pelletized by a pelletizer for resin. Also, the manufacture process of the above-described thermoplastic elastomer composition may be the above-described melting process and the thermoplastic elastomer composition in a molten state may be extruded from a die attached to an outlet portion of the extruder and provided for the above-described forming process for forming the film of the thermoplastic elastomer composition.

The film for tire 3 of the present invention may be suitably used as, for example, an air penetration preventing layer (innerliner layer) of a pneumatic tire. When the film for tire 3 of the present invention is used as an air penetration preventing layer (innerliner layer) of a pneumatic tire, the method of manufacturing a typical pneumatic tire may be used. In other words, by attaching the film for tire 3 of the present invention on a tire forming drum giving it a cylindrical shape, and then attaching tire components such as a carcass layer, a belt layer, a tread layer on top on one another in order to make a green tire, removing the green tire from the tire forming drum, and vulcanizing the green tire in a mold in a typical way, a pneumatic tire including the film for tire of the present invention as an air penetration preventing layer (innerliner layer) can be manufactured.

Examples

Preparation of Thermoplastic Elastomer Composition Of the raw materials indicated in Table 1, Br-IPMS was pelletized beforehand using a rubber pelletizer (available from Moriyama MFG. Co., Ltd.). The obtained rubber pellets, thermoplastic resin (nylon 6 and nylon 6/66 copolymer), acid modified elastomer (PIBSA), and crosslinking agent (zinc oxide or stearic acid) were introduced into a twin screw extruder (available from The Japan Steel Works, Ltd.) at the compounding ratios indicated in Table 1, and were kneaded at 250°C for three minutes. The kneaded product was extruded continuously in a strand-like form from the extruder and, after water cooling, was cut using a cutter in order to obtain a pellet-like thermoplastic elastomer composition.

[Table 1]

|  |  |  | Compounded content |
|---|---|---|---|
| Br-IPMS | Exxpro MDX89-4 | parts by weight | 92.0 |
| Acid modified elastomer | PIBSA | parts by weight | 8.0 |
| Thermoplastic resin | Nylon 6 | parts by weight | 17.0 |
|  | Nylon 6/66 copolymer | parts by weight | 53.0 |
| Additives | Zinc oxide | parts by weight | 5.0 |
|  | Stearic acid | parts by weight | 1.0 |
| Total |  | parts by weight | 176.0 |

The types of raw materials used as indicated in Table 1 are described below.
Br-IPMS: ExxonMobile Chemical Co., brominated isobutylene-p-methylstyrene copolymer rubber, Exxpro MDX89-4
Acid modified elastomer (PIBSA): Dover Chemical Corporation, polyisobutylene succinic acid anhydride, DOVERMULSE H1000
Nylon 6: Ube Industries, Ltd., UBE nylon 1013B (melting point 225°C, glass transition temperature 48°C)
Nylon 6/66 copolymer: Ube Industries, Ltd., UBE nylon 5023B (melting point 196°C, glass transition temperature 50°C)
Zinc oxide: Zinc Oxide III available from Seido Chemical Industry Co., Ltd. Stearic acid: beads stearic acid, available from NOF Corporation

Manufacture of Liner Material

The following five liner materials (liner material 1 to 5) were prepared. Three of the liner materials (liner material 1, 4, 5) are commercially available products and two of the liner materials (liner material 2, 3) are self-made. Further, the liner materials 2, 3 were manufactured by attaching a cast die (available from Pla Giken Co. Ltd.) to an outlet of a Φ50 mm single screw extruder (available from Sumitomo Heavy Industries Modern, ltd), configuring a sheet molding machine together with a take-off machine (available from TOMI machinery Co., Ltd) and winding machine (available from TOMI machinery Co., Ltd), extruding polypropylene (prime polypro E-333GV available from Prime Polymer Co., Ltd.) for the liner material 2 and polyamide (UBE nylon 5033B available from Ube Industries, Ltd.) for the liner material 3 from the cast die, drawing down a melted resin extruded from the outlet of the die on a cooling roll and winding the resin by a winding roll via a plurality of guide rollers. At this time, a cylinder temperature of the extruder during the sheet molding is 230°C and a temperature of the cast die is 240°C. Also, the melted resin is extruded from the cast die with a discharging rate of 70 kg/h and a take-off rate of the film is 6.0 m/min for the liner material 2 and 12.0 m/min for the liner material 3.

Liner material 1 (polyethylene sheet): polyethylene emboss film VAY from Ishijima Chemical Industries (thickness: 200 μm, width: 810 mm, length: 300 m)

Liner material 2 (polypropylene sheet): self-made (thickness: 250 μm, width 810 mm, length 300 m)

Liner material 3 (polyamide sheet): self-made (thickness: 100 μm, width 810 mm, length 300 m)

Liner material 4 (polyester sheet): Melinex S available from Teijin DuPont Film (thickness: 100 μm, width 810 mm, length 300 m)

Liner material 5 (EVA sheet): EVA liner available from Star Plastic (thickness: 120 μm, width 810 mm, length 300 m, cylindrical shape)

Manufacturing of Film for Tire

By attaching an annular die for inflation molding (available from Macro) to an outlet of Φ75 mm single screw extruder (available from GM engineering), an inflation molding machine was configured together with a take-off machine (available from Placo Co., Ltd) and a winding machine (available from TOMI machinery Co., Ltd). The pelletized thermoplastic elastomer composition obtained in "Preparation of thermoplastic elastomer composition" described above was melted and extruded from an annular outlet of the annular die. A bubble generated by blowing air into the melted thermoplastic elastomer composition extruded from the annular outlet was folded by a pair of pinch rolls. The inflation film was manufactured by winding the composition by a winding roll via a plurality of guide rollers. At this time, each of the liner materials described above was wound together on the winding machine and rolls for heat treatment (nine rolls with various types of liner materials described in Table 2 including Conventional Example 1, Comparative Example 1 to 2, Example 1 to 6) were formed. Further, a cylinder temperature of the extruder in inflation molding is 230°C and temperature of the annular die for inflation molding is 240°C. Also, the melted thermoplastic elastomer composition is extruded from the annular die with a discharging rate of 30 kg/h and a take-off rate of the film is 6.0 m/min. The thickness of the formed film is 60 μm, and the width is 650 mm.

Heat Treatment

8 rolls according to Comparative Examples 1 and 2 and Examples 1 to 6, excluding Conventional Example 1, were placed in a geer type oven (available from LabTex) and underwent heat treatment according to the temperature and time conditions indicated in Table 2. Here, Conventional Example 1 underwent film shrinkage evaluation described below without undergoing heat treatment. Rolls after heat treatment are extracted from the geer type oven and cooled at room temperature for 24 hours. The state of the rolls at this point (roll state after heat treatment) is shown in Table 2. This roll state is evaluated by visual inspection for state of rolls. If the entire appearance of the roll maintains a good condition, it is denoted as "good". If each of the liner materials are fused together, it is denoted as "success". If a large deformation is occurred in the entire roll, it is denoted as "fail". Here, even if the evaluation result is "success" and it is difficult to perform unwinding process of the film described below, no shrinkage of film is occurred as described below and the purpose to suppress the thermal shrinkage of film after formation is sufficiently achieved.

In this heat treatment, to research amount of contract of the liner material itself in the heat treatment, heat treatment under the same condition is applied to only the liner material for each example and shrinkage rate for each is derived, which is also shown in Table 2. A shrinkage rate (%) of the liner material is derived by cutting the liner material before heat treatment in a shape of belt having 10 cm in width which is perpendicular to an unwinding direction, measuring a width (w1) in a longitudinal direction, measuring a width (w2) in the longitudinal direction for liner materials after heat treatment, and calculating below equation with substituting these w1 and w2.

$$\text{Shrinkage rate (\%)} = 100 \times (w1 - w2)/w1$$

Film Shrink Evaluation

After the above heat treatment, films are unwound from each of the rolls and cut into belt shape with 10 cm width perpendicular to the winding direction of the film and measured a width (W1) in the longitudinal direction within 10 minutes. Also, each of the cut films are left at temperature of 25°C in the room for a week and measured a width (W2) in the longitudinal direction again. These width W1 and W2 are substituted in the following equation and film shrinkage rate (%) is derived, and shown in Table 2 as film shrinkage amount.

$$\text{Shrinkage rate (\%)} = 100 \times (W1 - W2)/W1$$

[Table 2-1]

|  |  | Conventional Example 1 | Comparative Example 1 | Example 1 | Example 2 |
|---|---|---|---|---|---|
| Liner material |  | Nil | Nil | Liner material 1 | Liner material 1 |
| Heat treating temperature | °C | - | 70 | 70 | 55 |
| Heat treating time | h | - | 24 | 24 | 72 |
| Shrinkage rate of liner material | % | - | - | 0.5 | 0.2 |
| Roll state |  | - | Fail | Good | Good |
| Film shrink amount | % | 5 | 0 | 0 | 0 |

[Table 2-2]

|  |  | Comparative Example 2 | Example 3 | Example 4 | Example 5 | Example 6 |
|---|---|---|---|---|---|---|
| Liner material |  | Liner material 1 | Liner material 2 | Liner material 3 | Liner material 4 | Liner material 5 |
| Heat treating temperature | °C | 40 | 80 | 100 | 100 | 70 |
| Heat treating time | h | 96 | 24 | 24 | 24 | 24 |
| Shrinkage rate of liner material | % | 0 | 0.4 | 0 | 0 | 0 |
| Roll state |  | Good | Good | Good | Good | Success |
| Film shrink amount | % | 4 | 0 | 0 | 0 | 0 |

Table 2 clearly shows that in Examples 1 to 6 processed with an appropriate liner material and temperature, no shrink of film is observed and thermal shrinkage of film after formation is successfully prevented. Further, regarding Example 6, each of the liner materials are fused together after heat treatment and evaluation of the roll state is "success". Although it is difficult to unwind the film, no shrinkage in film is observed. Accordingly, the purpose to suppress thermal shrinkage of film after formation is sufficiently achieved.

On the other hand, in Conventional Example 1, no heat treatment was applied. Thus, the thin film was formed without heat fixing, causing a large amount of shrinkage in the film for tire after unwinding. In Comparative Example 1, heat treatment is applied without using the liner material and shrinkage is occurred in the film for tires during heat treatment (roll state after heat treatment is "fail"). In Comparative Example 2, the heat treating temperature is lower than glass transition temperature of resin with the highest glass transition temperature in thermoplastic resin included in the film for tire and the film for tires is not sufficiently heat fixed and shrinkage is occurred in the film for tires after unwinding.

Reference Signs List

1 Extruder
2A Inflation die
2B T-shaped die
3 Film
4 Liner material
5 Roll

6 Core portion

**Claims**

1.  A method of manufacturing a film for tire used in an air penetration preventing layer of a pneumatic tire, composed of a thermoplastic elastomer with an elastomer component dispersed within a thermoplastic resin, the method comprising:
    performing heat treatment on the film for tire formed by inflation molding or cast molding in a state of being wound in a roll together with a liner material configured to regulate deformation of the film for tire,
    the heat treatment being at a heat treating temperature equal to or higher than a glass transition temperature of a resin with a highest glass transition temperature in the thermoplastic resin included in the film for tire.

2.  The method of manufacturing a film for tire according to claim 1, wherein
    the liner material is wider than the film for tire, does not adhere to itself at the heat treating temperature, and has a thermal shrinkage rate of 1% or less at the heat treating temperature.

3.  The method of manufacturing a film for tire according to claim 2, wherein
    a melting point or a softening point of the liner material is equal to or higher than the heat treating temperature.

4.  The method of manufacturing a film for tire according to any one of claims 1 to 3, wherein
    the liner material is a sheet or a fabric composed of at least one of polyethylene, polypropylene, polyamide, polyester, polyvinyl chloride, polytetrafluorethylene, and vulcanized rubber.

5.  The method of manufacturing a film for tire according to any one of claims 1 to 4, wherein
    a treatment time for the heat treatment is equal to or greater than a time it takes for a portion of the film for tire that is hardest to increase in temperature to reach the glass transition temperature, with the film for tire in a state of being wound in a roll together with the liner material.

6.  The method of manufacturing a film for tire according to any one of claims 1 to 5, wherein
    the thermoplastic resin is at least one polyamide resin selected from the group consisting of nylon 6, nylon 66, nylon 46, nylon 11, nylon 12, nylon 69, nylon 610, nylon 612, nylon 6/66, nylon 6/66/12, nylon 6/66/610, nylon MXD6, nylon 6T, nylon 6/6T, nylon 9T, and aromatic nylon.

7.  The method of manufacturing a film for tire according to any one of claims 1 to 6, wherein
    the elastomer component includes at least one selected from the group consisting of halogenated isoolefin-paraalkylstyrene copolymer rubber, acid anhydride modified ethylene-$\alpha$-olefin copolymer, styrene-isobutylene-styrene block copolymer, acid anhydride modified styrene-isobutylene-styrene block copolymer, and acid anhydride modified ethylene-ethyleacrylate copolymer.

# FIG. 1

FIG. 2

# FIG. 3

# FIG. 4

## INTERNATIONAL SEARCH REPORT

| International application No. |
|---|
| PCT/JP2017/033958 |

A. CLASSIFICATION OF SUBJECT MATTER

*B29C55/28*(2006.01)i, *B29C47/06*(2006.01)i, *B29C47/78*(2006.01)i, *B60C5/14*
(2006.01)i, *C08L23/00*(2006.01)i, *C08L53/02*(2006.01)i, *C08L77/00*(2006.01)i,
*B29K21/00*(2006.01)n, *B29K77/00*(2006.01)n, *B29L7/00*(2006.01)n,

According to International Patent Classification (IPC) or to both national classification and IPC

B. FIELDS SEARCHED

Minimum documentation searched (classification system followed by classification symbols)
B29C55/00-55/30, B29C47/00-47/96, B60C1/00-19/12, B29D30/00-30/72

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2004-506540 A (Exxonmobil Chemical Patents Inc.), 04 March 2004 (04.03.2004), claims; paragraphs [0035], [0038] & WO 2002/014410 A2 claims; page 11, lines 1 to 6, 19 to 25 & US 2004/0024126 A1  & CA 2419247 A1 & CN 1451025 A          & KR 10-2003-0022895 A | 1-7 |
| A | JP 2014-117827 A (The Yokohama Rubber Co., Ltd.), 30 June 2014 (30.06.2014), claims; paragraphs [0039] to [0043] (Family: none) | 1-7 |

|☒| Further documents are listed in the continuation of Box C. | | ☐ | See patent family annex. |

\* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 October 2017 (12.10.17) | 31 October 2017 (31.10.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**14**

**INTERNATIONAL SEARCH REPORT**

| International application No. |
| --- |
| PCT/JP2017/033958 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-277082 A  (Nitto Denko Corp.),<br>06 October 2000 (06.10.2000),<br>claims; paragraph [0023]<br>(Family: none) | 1-7 |
| A | JP 10-249974 A  (Nitto Denko Corp.),<br>22 September 1998 (22.09.1998),<br>claims; paragraph [0040]<br>(Family: none) | 1-7 |
| A | JP 5-331306 A  (Nitto Denko Corp.),<br>14 December 1993 (14.12.1993),<br>claims; paragraph [0044]<br>& US 5385777 A<br>claims; column 7, lines 3 to 13<br>& EP 565938 A1 | 1-7 |

Form PCT/ISA/210 (continuation of second sheet) (January 2015)

**INTERNATIONAL SEARCH REPORT**

| International application No. |
| --- |
| PCT/JP2017/033958 |

Continuation of A. CLASSIFICATION OF SUBJECT MATTER
  (International Patent Classification (IPC))

*B29L9/00*(2006.01)n

        (According to International Patent Classification (IPC) or to both national
        classification and IPC)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014117827 A